# NEW EUROPEAN PATENT SPECIFICATION

(11) **EP 0 529 080 B2**
(45) Date of publication and mention of the opposition decision: **14.12.2005**
(45) Mention of the grant of the patent: 04.09.1996
(21) Application number: 92904242.2
(22) Date of filing: 29.01.1992
(51) Int. Cl.: B29C 45/00, B29C 49/06, B29C 45/17

(54) **Injection molding method for molding a hollow article.**
Injektionblasformen eines hohlen Artikels .
Procédé de moulage par injection pour mouler un article creux.

(30) Priority: 30.01.1991 JP 2762991
(43) Date of publication of application: 03.03.1993
(73) Proprietor: Asahi Kasei Kogyo Kabushiki Kaisha, Osaka-shi, Osaka 530-8205 (JP)
(72) Inventor: HORIKOSHI, Maki, Kawasaki-shi, Kanagawa 215 (JP); TANAKA, Yuji, Yokohama-shi, Kanagawa 233 (JP); NISHIURA, Keiji, Kawasaki-shi, Kanagawa 214 (JP)
(74) Representative: Smulders, Theodorus A.H.J.
(86) International application number: PCT/JP1992/000087
(87) International publication number: WO 1992/013699

(56) References cited:
- JP-A- 1 168 425
- JP-A- 2 289 327
- JP-A- 64 014 012
- JP-B- 62 058 293
- US-A- 3 767 742
- US-A- 4 247 515
- PATENT ABSTRACTS OF JAPAN vol. 14, no. 323 (M-997)11 July 1990 & JP-A-21 08 510 (TOYODA GOSEI CO LTD) 20 April 1990

## Description

### TECHNICAL FIELD

The present invention relates to an injection molding method for molding hollow articles, having at least one supporting rib between oppositely located walls, comprising the steps of
- injecting a melted resin into the cavity of a metal mold, said mold having a movable cavity surface provided with at least one protrusion at a location where a supporting rib is to be formed, and
- supplying a pressurized fluid into said metal mold cavity.

### BACKGROUND ART

Conventionally, when an intection-motded article having hollow portions is molded by injecting an amount of melted resin into a metal mold cavity which amount is smaller than the volume of that cavity and a pressurized fluid (mainly composed of a gas) is injected into the metal mold cavity, the necessary strength of the article is obtained by partial retaining webs (hereinafter, referred to as webs or ribs) connected to the skin portions of the molded article.

From US-A-4,247,515 is known to use key stocks, attached to a metal mold cavity surface, whereas the viscosity, elasticity and density of a melted resin, the interfacial tension between the pressurized fluid and the melted resin and the like are adjusted. Since the portions of the metal mold cavity where the key stocks are located have a decreased flow section which is difficult to cross over by the pressurized fluid, a plurality of hollow portions or pockets are formed around the key stocks and the resin is blocked in the vicinity of the key stocks, solid ribs being formed from this resin.

Further JP-B-61-53208 discloses the division of the melted resin in the mold cavity into portions of different amount and fluidity. A pressurized gas is introduced into the smaller melted resin portion, having a high fluidity to form the hollow parts or pockets of the hollow article. The other melted resin portion remains solid to form solid ribs. In addition, this patent discloses a method in which a melted resin and a pressurized gas are introduced into a metal mold cavity provided with parts d different dimensions and a method in which a pressurized gas is introduced into the melted resin present in the partially enlarged parts of the metal mold cavity to make these resin portions hollow. The resins present in the smaller parts of the metal mold cavity are retained as solid ribs. According to this reference these methods may be used in combination.

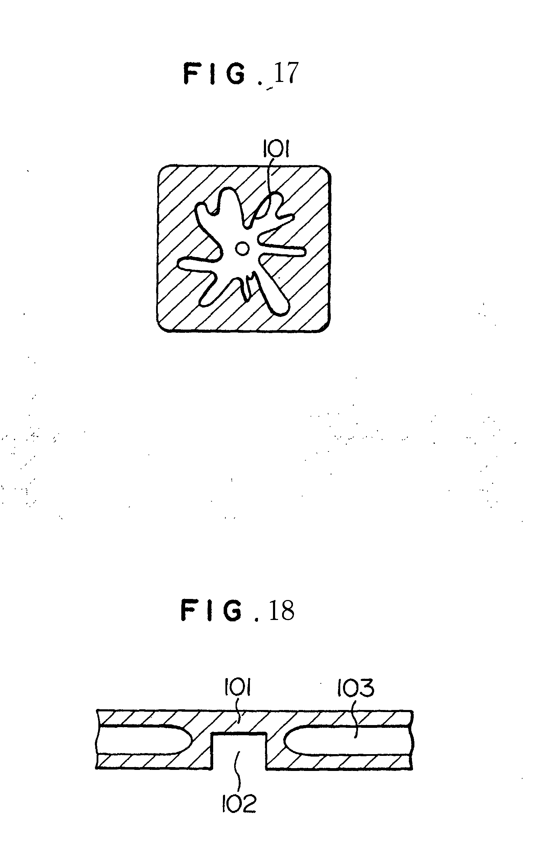

If in the method disclosed in US-A-4,247,515, high key stocks are attached to a surface of the metal mold cavity, a mold cavity part to which the pressurized fluid is supplied can be securely isolated. However, if a mold cavity part is delimited by high key stocks a deep recess is created in the injection-molded hollow article making the wall thickness of the rib thus formed thinner and lowering the strength of the molded product. Although this reduction of the rib strength can be prevented by lowering the height of the key stocks, this lowering of the height makes the separation of the cavity part into which the pressurized fluid is introduced inaccurate. Since the location and size of the ribs are controlled more or less accidentally, the position of the ribs cannot be predetermined. Therefore, as shown in Figs. 18 and 19, the molded article obtained has ribs 101 having an irregular location and shape, the desired size of which cannot be securely placed at the location which is effectively required. Therefore a molded article having a desired strength cannot be obtained. Further, a recess 102, which is not necessarily present in an injection-molded hollow article, is formed in the molded article by the key stocks attached to a metal mold cavity surface.

Further, since various factors influence the division of the melted resin in the metal mold cavity into portions of different amount and fluidity as in the methods disclosed in JP-B-61-53208, this division cannot be accurately controlled. Therefore, the location and size of the ribs to be formed are also controlled more or less accidentally. As a result, as shown in Fig. 20, this method has the drawback that the location and shape of a rib 101 is irregular and that not only this location and shape cannot be predetermined but also that the hollow ratio of the article to be formed cannot be made as large as desired. Further, as shown in Fig. 21, the method of using a metal mold cavity having a part the height of which can be partially changed or a part which can be partially expanded has the drawback that the presence of a recess 102 (or projection) in the injection-molded hollow member obtained cannot be avoided. In particular, when the thickness of an injection-molded hollow article cannot bo greatly varied, a gas cannot be preferentially introduced into the thicker portion of the melted resin in the mold cavity and the location and shape of the ribs 101 to be formed are controlled accidentally and thus the ribs cannot be formed in the desired way. Further, in the case of an injection-molded hollow article having a part of a large thickness extended over a wide region, a single hollow pocket 103 is formed over this region, and thus the problem arises that a hollow part having a desired size cannot be provided in a core for which a given strength must be maintained.

As described above, the prior art methods have a great many restrictions in a case where ribs having a desired size are to be formed at a desired location, and thus the size and shape of an injection-molded hollow article and the size of the hollow portion thereof (hollow ratio) are restricted.

### DISCLOSURE OF THE INVENTION

Taking the above problems of the prior art methods into consideration, it is an object of the present invention to provide a method for molding an injection molded hollow article which is securely provided with a desired strength, without the formation of unnecessary recesses and differences in thickness.

According to the present invention the above specified injection molding method is characterised in that
- the protrusion is a movable core capable of projecting into the metal mold cavity and of being retracted, independently of said cavity surface, from a projected position,
- said pressurised fluid being supplied into said cavity in the state in which said movable core projects into said cavity and
- the volume of said cavity being initially increased by moving said cavity surface while said movable core is kept at a constant distance from the apposite cavity surface of the mold, followed by a retraction of said movable core until the extreme end thereof substantially coincides with said cavity surface.

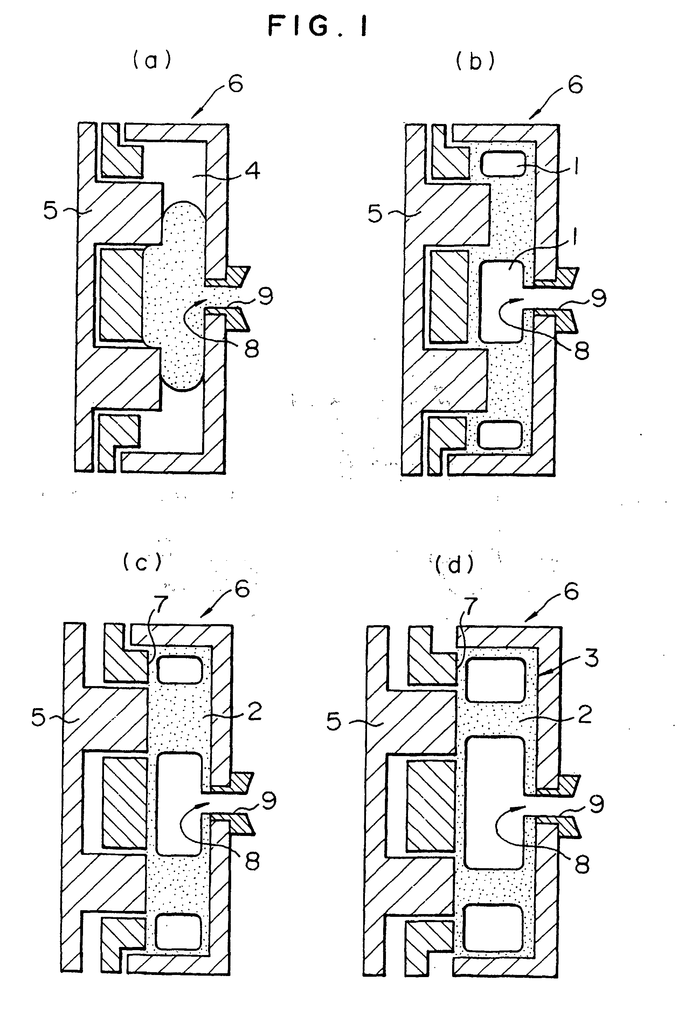

At illustrated in Figure1, a method of molding an injection-molded hollow article having a desired hollow ratio, comprises the steps of injecting a melted resin into the cavity 4 of a metal mold 6 having a movable core 5 wherein the volume of the metal mold cavity 4 can be increased by the movement of a cavity surface 7, supplying a pressurized fluid into the metal mold cavity 4 in the state in which the movable core 5 projects into the metal mold cavity, and increasing the volume of the metal mold cavity by the retraction of the movable core and the movement of the cavity surface 7 of the metal mold 6.

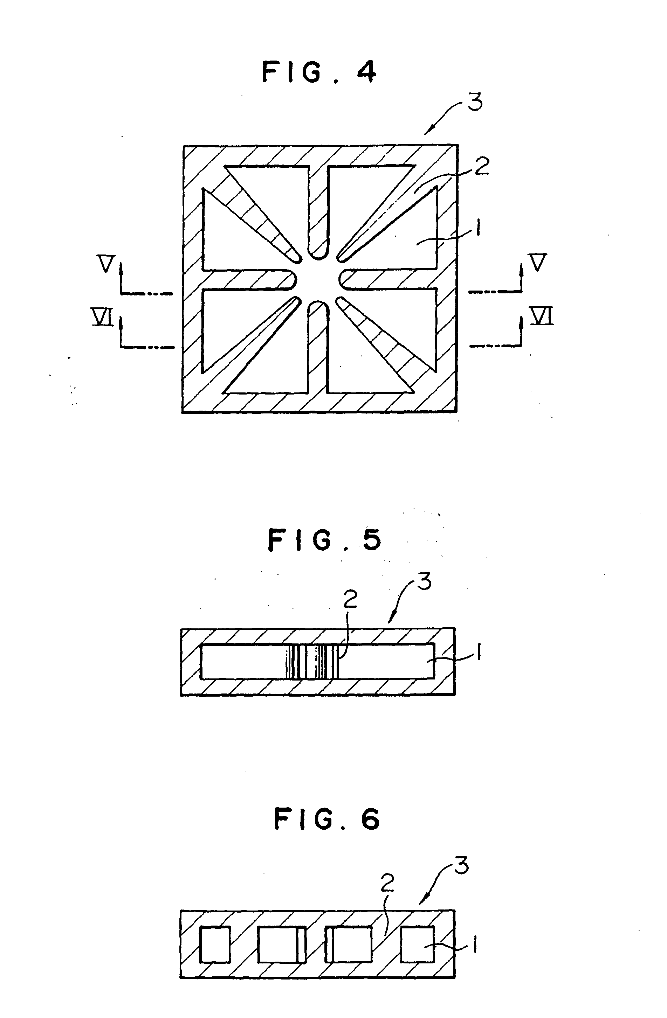

Figures 4 - 6, Figures 7 - 9 and Figures 10 and 11, show an integrally molded artide which has a hollow ratio of 20 to 90% and is provided with support portions 2 of a predetermined size integrally connected to surfaces oppositely located at both sides of a hollow portion.

### BRIEF DESCRIPTION OF THE DRAWINGS

Figure 1 is a flowchart of an injection molding method and a sectional view of a metal mold used for such method;
Figure 2 is a view explaining another example of a metal mold cavity;
Figure 3 is a view explaining another example of a metal mold cavity;
Figure 4 is a horizontal cross sectional view showing an example of an injection-molded hollow article:
Figure 5 is a cross sectional view taken along the line V-V of Figure 4;
Figure 6 is a cross sectional view taken along the line VI-VI of Figure 4;
Figure 7 is a horizontal cross sectional view showing other example of an injection-molded, hollow member;
Figure 8 is a cross sectional view taken along the line VIII-VIII of Figure 7;
Figure 9 is a cross sectional view taken along the line IX-IX of Figure 7;
Figure 10 is a horizontal crosss sectional view showing another example of a hollow injection-molded article;
Figure 11 is a cross sectional view taken along the line XI-XI of Figure 10;
Figure 12 is view explaining a molding apparatus suitable for the injection molding method;
Figure 13 is a plan view of the metal mold cavity of a metal mold used in Example 1;
Figure 14 is a view explaining the operational sequence of Example 1;

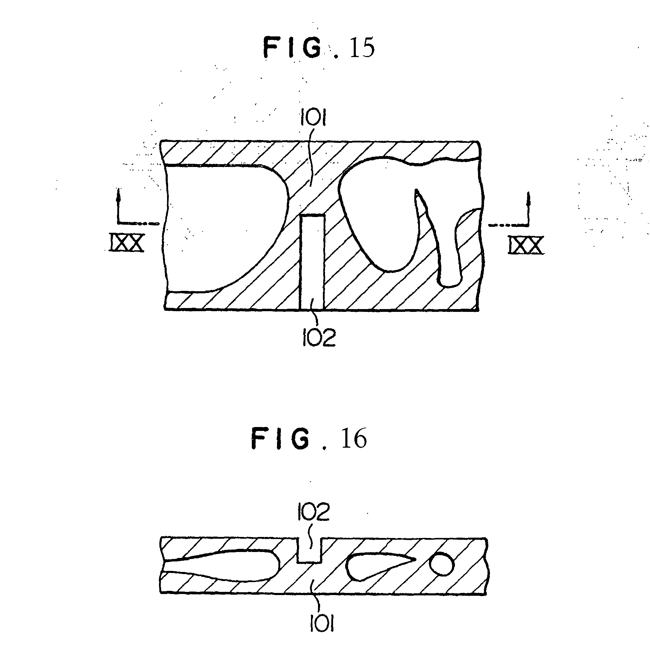

Figure 15 is a view explaining a prior art method;
Figure 16 is a view explaining the prior art method taken along the line XIX-XIX of Figure 18;
Figure 17 is a view explaining another prior art method; and
Figure 18 is a partial view of a molded article according to a prior art method.

### Various injection molding methods

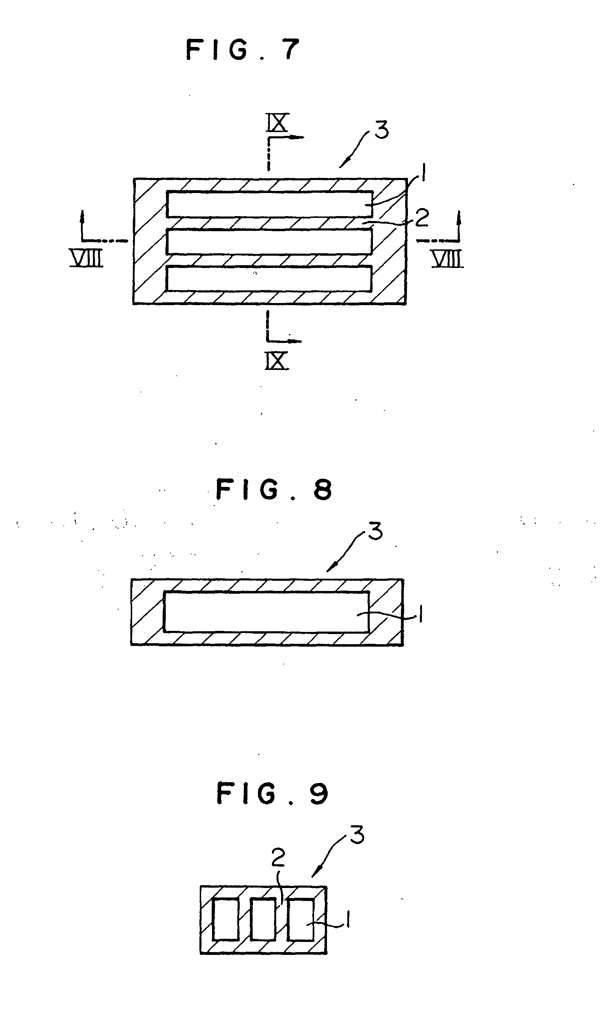

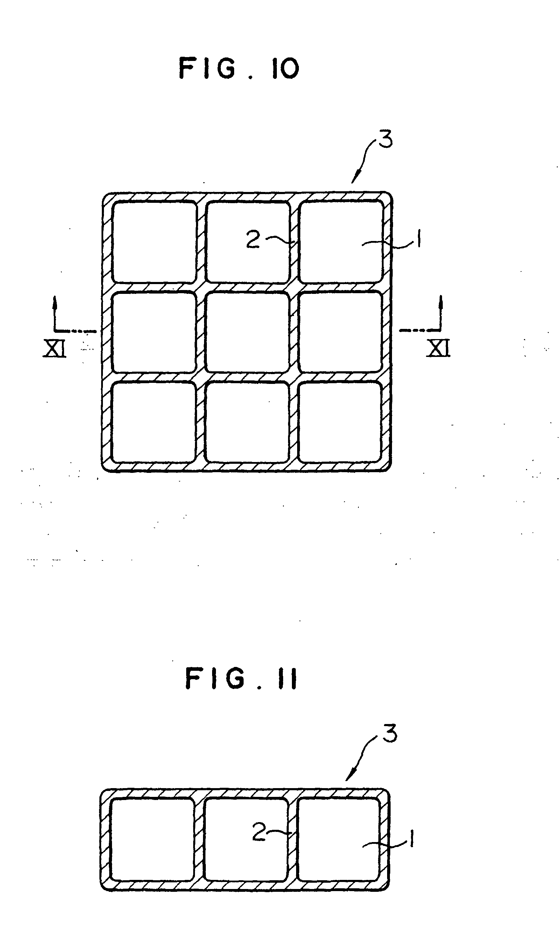

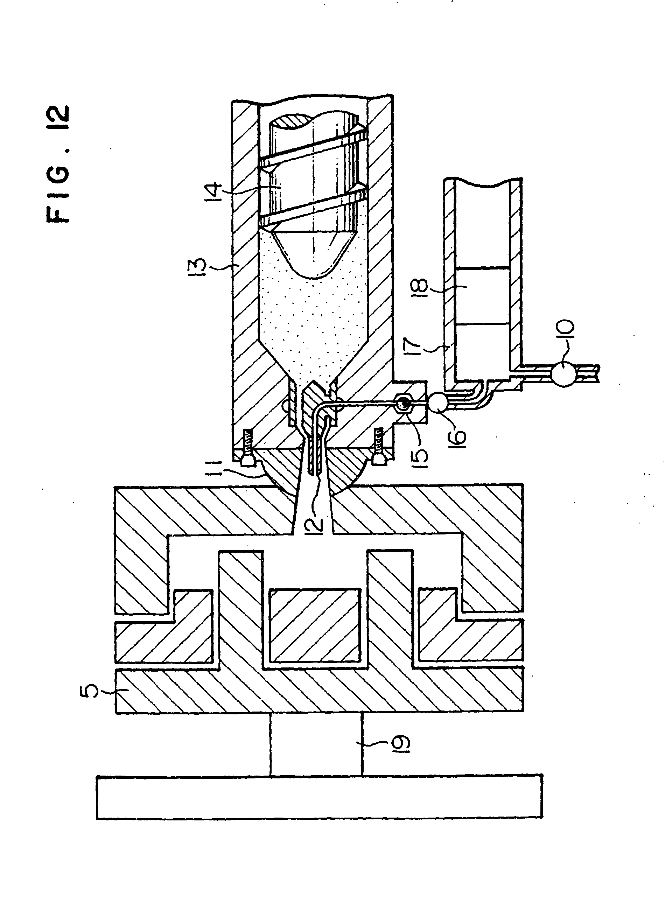

As shown, for example, in Figures 4 - 6, Figures 7 - 9, and Figures 10 and 11, an injection-molded hollow article according to the present invention has a hollow ratio of 20 - 90% and support portions (ribs) 2 of a predetermined size and shape located at predetermined positions in the cross section thereof. Each of these support portions 2 is integrally connected to surfaces oppositely located at both sides of a hollow portion 1 to serve as a support wall or support column. In parficular, the injection-molded hollow article shown in Figures 4 - 6 has support portions 2 extending radially from the vicinity of the center thereof, the injection-molded hollow article shown in Figures 7 - 9 has support portions 2 disposed parallel to each other, and further the injection-molded hollow article shown in Figures 10 and 11 has grid-shaped intersecting support portions 2.

The support portion 2 may be formed as a flat wall of, for example, a linear shape, a curved shape, a polygonal shape and the like, or as a pilar, for example, of a circular shape, a square shape or an elliptic shape and the like. When the support portion 2 has a wall shape, it may be suitably selected from a long wall to a short wall as desired. Further, when the support portion 2 has a pillar shape, the diameter of the support portion 2 may be suitably selected as desired.

The support portions 2 may be disposed in various arrangements selected from, for example, a radial arrangement, a parallel arrangement, and an intersecting arrangement such as, for example a grid arrangement, zigzag arrangement, and the like dependent on the shape and size of the injection-molded hollow article, the size of the hollow portion 1, and the like. Further, a wall-shaped support portion 2 and a pillar-shaped support portion 2 may be provided in combination.

As described above, since the support portions 2 of the injection-molded hollow article are arranged as the support walls or support pillars and formed to a predetermined size and shape, located at a predetermined location, by making use of a movable core to be described later, the necessary strength of the article can be securely maintained even if the hollow portion 1 has a large size.

The above injection-molded hollow member can be molded by applying, for example, an injection molding method and a metal mold 6 shown in Figure 1.

First, as shown in Figure 1 (a), a melted resin is injected into a metal mold cavity 4. This injection can be carried out in the state that the volume of the metal mold cavity 4 is arbitrarily increased by moving a cavity surface 7 to be described later in addition to a so-called closed state. The state of the metal mold when the melted resin is injected may be selected depending upon the shape and hollow ratio of the hollow article to be molded.

A resin used for the present invention is not particularly limited so long as it is melted at a predetermined temperature and can be smoothly moved in a metal mold by a pressurized fluid. More specifically, any thermoplastic resin can be used regardless of the type thereof and, further, any thermosetting resin having the above characteristics can be also used. Of course, a resin to be used may be selected in accordance with the application and shape of the molded article.

Various additives such as a pigment and the like usually used in an injection molding resin may be suitably used in a molding operation.

An amount of a melted resin to be injected into the metal mold cavity is adjusted in accordance with the shape and hollow ratio of a desired injection-molded hollow article. When the metal mold cavity 4 has a shape substantially symmetrical with respect to a gate 8 and has no irregular wall thicknesses, the amount of melted resin to be injected into the metal mold cavity is preferably 40 - 95% of the volume of the metal mold cavity 4 in the state in which a movable core 5 projects into the metal mold cavity 4. When the metal mold cavity 4 has an irregular wall thickness and thin wall portions, the amount of resin to be injected is preferably sufficient to fill the metal mold cavity 4 in the state in which the movable core 5 is projected into the metal mold cavity 4. In the latter case, the hollow ratio is determined by the increase ratio of the volume of the metal mold cavity caused by the retraction of the movable core 5 and the movement of the cavity surface 7.

It is to be noted that in the following description, the case in which an injected amount of melted resin is smaller than the amount filling the metal mold cavity with the movable core 5 projected thereinto is referred with the movable core 5 projected thereinto is referred to as "short shot" and the case in which aninjected amount is sufficient to completely fill the metal mold cavity 4 with the movable core 5 in the same state is referred to as "full shot".

As shown in Figure 1 (a), although the injection of the melted resin is usually carried out in the state in which the movable core 5 projects into the metal mold cavity 4, the movable core 5 may be projected simultaneously with the injection of the melted resin or after the completion of injection of a predetermined amount of the melted resin.

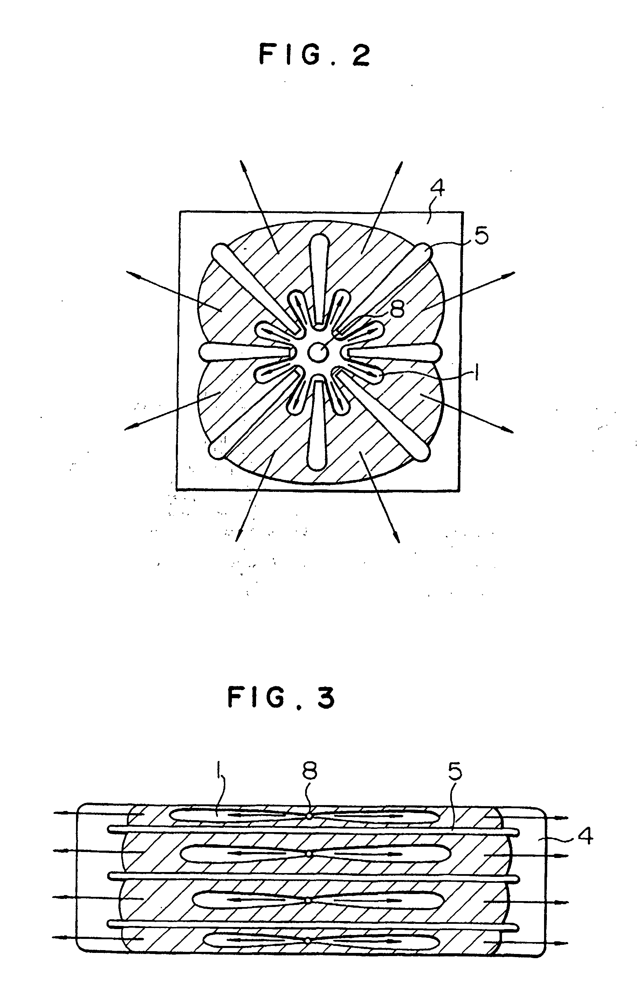

As shown in Figure 2, when the respective movable cores 5 extend radially from the vicinity of a gate 8 as a center, the melted resin can be injected into the metal mold cavity 4 through this single gate 8 located at the center. Further, as shown in Figure 3, when the respective movable cores 5 are disposed parallel, the melted resin is difficult to be uniformly supplied between the respective movable cores 5 from a single location, and thus the melted resin may be supplied through a plurality of gates 8 disposed at the center between the respective movable cores 5.

Next, as shown in Figure 1 (b), a pressurized fluid is introduced into the melted resin in the metal mold cavity 4 in the state in which the movable core 5 projects thereinto. In the case of a short shot, inner uncooled and movable melted resin in the metal mold cavity 4 is forced to the inner portion thereof by the pressurized fluid and forms the hollow portion 1, while there remains the resin which comes into contact with the wall surface of the metal mold cavity 4 and of the movable core 5 and which is cooled thereby and is thus difficultly flowing. Further, in the case of a full shot, the hollow portion 1 is formed by introducing the pressurized fluid, the dimensions of the holow pocket corresponding to the amount of volume contraction of the melted resin caused when it is cooled.

Usually, the pressurized fluid can be introduced into the metal mold cavity 4 from the gate 8 through the injection path of the melted resin. However, the pressurized fluid may be directly introduced into the metal mold cavity 4 by providing a separate inlet therefor without using the gate 8 being a supply port for the melted resin, depending on the shape and the like of a desired injection-molded hollow article. In particular, as shown in Figure 3, when a plurality of gates 8 are provided as supply ports for the melted resin, it is preferable that the pressurized fluid is directly supplied into the metal mold cavity 4.

In the case of a short shot, the introduction of the pressurized fluid may be carried out together with the injection of the melted resin or after completion of the injection of a predetermined amount of the melted resin. In the case of the full shot, it is carried out after completion of the injection of a predetermined amount of the melted resin.

When the pressurized fluid is introduced together with the injection of the melted resin, it must be introduced into the metal mold cavity 4 in such a manner that the direction in which the pressurized fluid is introduced coincides with the direction in which the melted resin is supplied so that the pressurized fluid is envelopped with the melted resin. This result can be achieved in such a manner that the pressurized fluid is introduced into the metal mold cavity 4 together with the melted resin from a sprue 9 through the gate 8, with the movable core 5 and the gate 8 disposed as shown in Figures 2 and 3.

Simultaneously with, during, or after the supply of the above pressurized fluid, the movable core 5 is retracted from the projected position in the metal mold cavity 4 to a predetermined position, as shown in Figure 1 (c). A gap created by the retraction of the movable core 5 is filled as a result of the movement of the resin in the periphery thereof and thus the support portion 2 is formed. Since this support portion 2 is securely formed at the position where the movable core 5 is disposed and in accordance with the shape of the movable core 5, the support portion 2 having a desired shape can be formed at a desired position by suitably selecting the position and shape of the movable core 5.

A position for the movable core 5 to be disposed is selected as a position which must be reinforced by supporting two surfaces located on the opposite sides of the hollow portion 1 in accordance with the shape of an injection-molded hollow article to be molded, the size of the hollow portion 1 and the like. The movable core 5 is formed as a flat plate of, for example, a linear shape, a curved shape, a polygonal shape and the like, or a pillar having, for example, a circular, polygonal, or elliptic cross section or the like so that the obtained support portion 2 can be formed as a wall or pillar having various shapes, and thus the size of the support portion 2 obtained can be adjusted by adjusting the length, thickness, diameter and the like of the movable core 5. Further, the movable core 5 can be disposed in various arrangements such as a radial arrangement, a parallel arrangement, a grid arrangement, a zigzag arrangement and the like. Further, the plate-shaped movable core 5 and pillar-shaped movable core 5 may be provided in combination.

Although the movable core 5 can be formed in various shapes as described above, it is preferably formed as a pin shape having a circular cross section, because in this case the movable core 5 can be arranged in a metal mold 6 only by drilling holes therein. The metal mold 6 can be easily machined. Further, in the case that pin-shaped movable cores 5 are employed, when a long pitch-distance is provided therebetween, a pillar-shaped support portion 2 is formed, and when a short pitch-distance is provided therebetween, a continuous wall-shaped support portion 2 is formed between the movable cores 5.

The retraction of the movable core 5 is usually completed at a location where the extreme end of the movable core 5 substantially coincides with the cavity surface 7, and the support portion 2 can be formed without projections and recesses being present on the surface of an injection-molded hollow article by retracting the movable core 5 to this surface. When, however, there is formed an injection-molded hollow article 3 which can be applied even it some projections and recesses are formed thereon, the retraction of the movable core 5 may be stopped in the position in which the extreme end of the movable core 5 projects into the metal mold cavity 4 or the movable core 5 may be retracted until the extreme end d the movable core 5 is retracted from the cavity surface 7 to some degree.

At the step shown in Figure 1 (c), the resin in the metal mold cavity 4 Is sufficiently cooled for the metal mold 6 to be opened after the pressurized fluid in the hollow portion 1 has been discharged. However, the volume of the metal mold cavity is preferably increased by movement of the cavity surface 7 shown in Figure 1 (d) to further enlarge the hollow portion 1 and reduce the density of the injection-molded hollow article obtained. This movement of the cavity surface 7 may be effected simultaneously with or after the beginning of the supply of the pressurized fluid at any time prior to, simultaneously with or after the retraction of the movable core 5. The cavity surface 7 may be moved by a usual method.

Although the cavity surface 7 to be moved is usually the cavity surface 7 on the side where the movable core 5 is provided, the cavity surface 7 on the opposite side or both cavity surfaces 7 may be moved.

When the volume of the metal mold cavity is increased by movement of the cavity surface 7 after the retraction of the movable core 5, the thickness and diameter of the support portion 2 can be made smaller than those of the movable core 5, whereas, when the volume is increased before the retraction of the movable core 5, the thickness and diameter of the support portion 2 can be made larger as compared with the prior case in which the volume is increased after the retraction of the movable core 5. The thickness and diameter of the support portion 2 obtained and the hollow ratio of the injection-molded hollow article obtained can be arbitrarily adjusted by adjusting the increase ratio of the volume of the metal mold cavity by the thickness and retracting distance of the movable core and the moving distance of the cavity surface 7, regardless of the timing at which the movable core 5 is retracted.

After the injection-molded hollow article 3 provided with the desired hollow portion 1 and support portion 2 has been molded, the pressure in the hollow portion 1 is returned to substantially atmospheric pressure, the metal mold 6 is opened, and the injection-molded hollow article is taken out.

The pressurized fluid in the hollow portion 1 can be discharged in such a manner that an injection nozzle (not shown in Figure 1) is removed from the metal mold 6 and the pressurized fluid is discharged into the atmosphere through the gate 8 and sprue 9. Further, the pressurized fluid can be withdrawn for reuse through a pressurized fluid nozzle contained in the injection nozzle or through a withdrawal port provided in the injection nozzle in the state in which the injection nozzle is inserted into the metal mold 6.

The thus obtained injection-molded hollow article has holes or pockets defined by the portions to which the pressurized fluid has been introduced. When the pressurized fluid is introduced through the gate 8 of the metal mold 6, these holes can be capped by injecting a small amount of the melted resin after the pressurized fluid in the hollow portion 1 has been discharged.

When a molding operation is carried out by using the metal mold 6 having the movable core 5 disposed therein as shown in Figure 2, the injection-molded hollow article shown in Figures 4 - 6 can be obtained. Further, when a molding operation is carried out by using the metal mold 6 having the movable cores 5 disposed therein as shown in Figure 3, the injection-molded hollow article shown in Figures 7 - 9 can be obtained.

A pressurized fluid used in the present invention is a fluid which is in the gas or liquid state at room temperature and atmospheric pressure and does not react or mix with a resin in use at the temperature and pressure at which the resin is injected. More specifically, the pressurized fluid includes, for example, nitrogen gas, carbonic acid gas, air, helium gas, water, glycerin, liquid paraffin and the like. An inert gas such as nitrogen gas, helium gas or the like is preferable.

Next, a molding apparatus suitable for the application of an injection molding method according to the present invention will be described with reference to Figure 12.

In Figure 12, numeral 11 designates an injection nozzle containing a pressurized fluid nozzle 12. Further, an injection cylinder 13 disposed rearwardly of the injection nozzle 11 is similar to a usual cylinder and includes a screw 14. When the screw 14 is advanced, a melted resin is pushed out and injected from the injection nozzle 11 through a gap around the pressurized fluid nozzle 12.

A compression cylinder 17 is connected to the pressurized fluid nozzle 12 through a check valve 15 and a valve 16. A pressurized fluid is compressed by the forward movement of the piston 18 in the compression cylinder 17 and maintained at a high pressure. Note that the pressurized fluid is introduced into the compression cylinder 17 from a pressurized fluid source (not depicted) by opening a valve 10.

Movable cores 5 are provided in a metal mold 6 and located on the opposite side of the portion where the injection nozzle 11 is connected to the metal mold 6. These movable cores 5 can be advanced and retracted by a hydraulic cylinder 19, and when advanced, the movable cores 5 project into a metal mold cavity 4.

Although all the movable cores 5 are advanced and retracted at the same time by the single hydraulic cylinder 19 in the illustrated apparatus, it is also possible that the movable cores 5 are divided into groups and each group is advanced and retracted or each movable core 5 is advanced and retracted.

With the above apparatus, an injection-molded hollow article can be molded in accordance with the sequence shown in Figure 1, with the injection nozzle connected to the metal mold 6 as shown in Figure 12.

### Examples

### Example 1

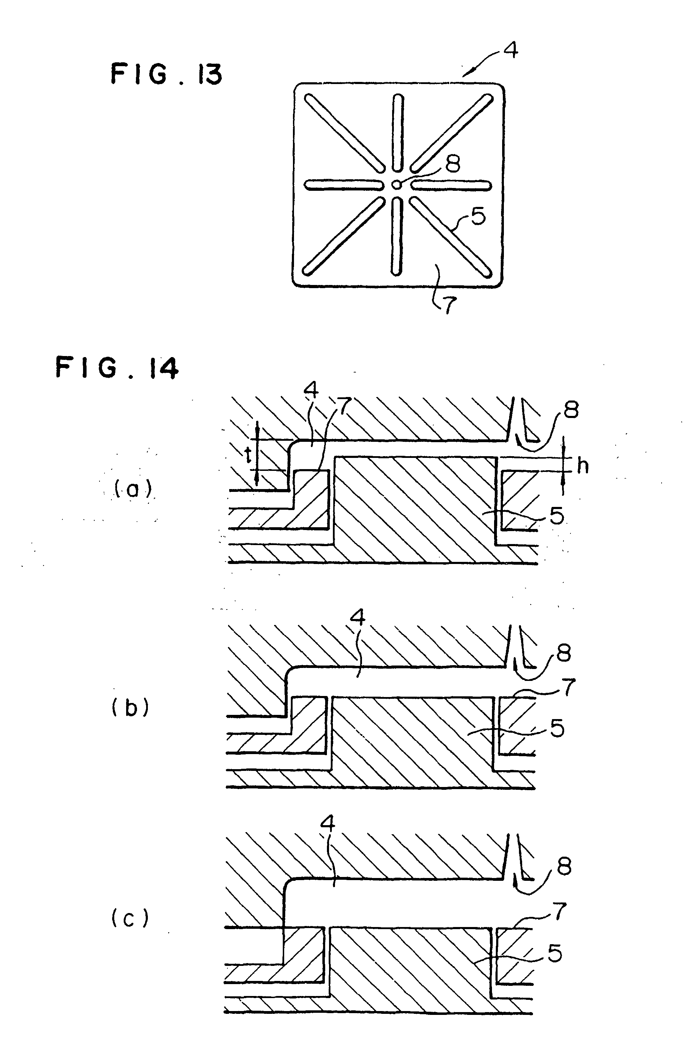

Figure 13 shows a plan view of a metal mold cavity 4 used in this embodiment. The metal mold cavity 4 has a flat square plate shape of 200 mm x 200 mm and has a gate 8 at the center thereof (on the opposite side of the surface where the movable cores 5 are provided). A melted resin and a pressurized fluid are supplied from this gate 8 through a nozzle 11 containing a pressurized fluid nozzle 12 as shown in Figure 12.

The movable cores 5 have a plate shape and comprise eight core pieces radially extending from the vicinity of the center of the gate 8. A cavity surface 7 on the side where the movable cores 5 are disposed can be moved in a direction for increasing the volume of the metal mold cavity 4. Further, each of the movable cores 5 has a thickness of 6 mm.

As shown in Figure 14 (a), the position of the cavity surface 7 on the side where the movable cores 5 are disposed and the position of the movable cores 5 were adjusted prior to the injection of the melted resin so that the height t of the metal mold cavity 4 was 16 mm and the distance h over which the movable cores 5 projected into the metal mold cavity 4 was 8 mm.

High impact polystyrene melted by being heated to 220°C was injected into the metal mold 6 in the above state in an amount of 70% of the volume of the metal mold cavity 4 in that state and thereafter nitrogen gas having a pressure of 30 Kg/cm² was injected into the melted resin in the metal mold cavity 4.

After the injection of the nitrogen gas, the movable cores 5 were retracted by 8 mm into the position where the extreme end surfaces of the movable cores 5 coincided with the cavity surface 7 on the side where the movable cores 5 are disposed as shown in Figure 14 (b), and thereafter the cavity surface 7 were moved by 10 mm together with the movable cores 5 and thus the volume of the metal mold cavity was increased as shown in Figure 14 (c).

After the resin in the metal mold cavity had been cooled and solidified, the nitrogen gas injected under pressure was discharged and the metal mold was opened, and the injection-molded hollow article was taken out. The thus obtained injection-molded hollow article was light and had a surface on which no irregularities were formed, a thickness of 26 mm, a weight of 471 g. a hollow ratio of 52% and eight wall-shaped support portions were formed in the interior of the cross section of the injection-molded hollow article in correspondence with the positions of the movable cores in the metal mold. Each of the support portions had a minimum wall thickness of 2 mm, extended radialy from the center of the injection-molded hollow article and was contiguous to the peripheral wall of the injection-molded hollow article. The injection-molded hollow article obtained had an excellent rigidity.

### Example 2 (according to the invention)

A injection molding operation was carried out by using the same metal mold as in Example 1, in the same way as Example 1 except that the volume of the metal mold cavity was increased by moving cavity surface on the side where the movable cores are disposed prior to the retraction of the movable cores. Thereafter the movable cores were retracted and the extreme end of the movable cores was caused to coincide with the cavity surface on the side where the movable cores were disposed.

Although a thus-obtained injection molded hollow article was substantially the same as the injection-molded hollow member obtained in Example 1; the formed support portions had smaller portions having a thickness of 3 mm.

### Example 3

A hollow injection molding operation was carried out by using the same metal mold as in Example 1, in the same way as Example 1 except that the volume of the metal mold cavity was increased by the movement of a cavity surface performed simultaneously with the retraction of the movable cores in the state in which the movable cores were projecting into the metal mold cavity by 8 mm.

Although a thus-obtained injection-molded hollow member was substantially the same as the injection-molded hollow article obtained in Example 1, one of the surfaces thereof showed irregularities and the formed support portions had, at their smallest portions, a thickness of 3 mm.

### Comparative Example 1

A metal mold having the same size and shape as described in Example 1 was used, the mold not being provided with movable cores.

First, one of the cavity surfaces (the cavity surface opposite to the side where a gate was disposed) was moved to thereby adjust the height of the metal mold cavity to 16 mm. Thereafter high impact polystyrene, melted by being heated to 220°C, was injected into the metal mold cavity in the above state in an amount of 70% or the volume of the metal mold cavity and thereafter nitrogen gas having a pressure of 30 Kg/cm² was introduced into the melted resin in the metal mold cavity.

After the supply of the nitrogen gas, the same cavity surface as the one described above was moved by 10 mm to thereby adjust the height of the metal mold cavity to 26 mm.

Although a thus-obtained injection-molded hollow article was light with a weight of 473 g and a hollow ratio of 51.5%, the support portions formed in the interior of the cross section thereof were not located at given positions, had an extremely large wall thickness toward the peripheral wall of the injection-molded hollow article and the wall thickness of the support portions was not uniform. Therefore, recesses had partially developed in the thick wall portions by thermal contraction.

### Comparative Example 2

A injection molding operation was carried out by the same method as in Example 1 except that the movable cores were not retracted and a cavity surface was not moved after the injection of the melted resin and the supply under pressure of a nitrogen gas, as described in Example 1.

A thus-obtained injection-molded hollow article had a thickness of 16 mm, a width of 200 mm, a length of 200 mm, a weight of 471 g and a low hollow ratio of 26.4%, while irregularities were formed on one of the surfaces thereof. Formed support portions were thick, with a minimum wall thickness of 9 mm and thus a prolonged cooling time was required.

## Claims

1. An injection molding method for molding hollow articles, having at least one supporting rib (2) between oppositely located walls, comprising the steps of
- injecting a melted resin into the cavity (4) of a metal mold (6), said mold (6) having a movable cavity surface (7) provided with at least one protrusion (5) at a location where a supporting rib (2) is to be formed, and
- supplying a pressurized fluid into said metal mold cavity **characterized in that**
- the protrusion is a movable core (5) capable of projecting into said metal mold cavity (4) and of being retracted, independently of said cavity surface (7) from a projected position,
- said pressurized fluid being supplied into said cavity (4) in the state in which said movable core (5) projects into said cavity (4) and
- the volume of said cavity (4) being initially increased by moving said cavity surface (7) while said movable core (5) is kept at a constant distance from the opposite cavity surface of the mold (6), followed by a retraction of said movable core (5) until the extreme end thereof substantially coincides with said cavity surface (7).

## Patentansprüche

1. Spritzgieß-Formverfahren zum Formen von hohlen Gegenständen mit mindestens einem Stützteil (2) zwischen einander gegenüber liegenden Wänden, welches folgende Stufen umfasst:
- Einspritzen eines geschmolzenen Harzes in den Hohlraum (4) einer Metallform (6), wobei die Metallform (6) eine bewegliche Hohlraumoberfläche (7) mit mindestens einem Vorsprung (5) dort aufweist, wo das Stützteil (2) gebildet werden soll, und
- Zuführen eines unter Druck stehenden fluiden Mediums in den Hohlraum der Metallform,
**dadurch gekennzeichnet, daß**
- der Vorsprung ein beweglicher Kern (5) ist, der befähigt ist, in den Hohlraum (4) der Metallform vorzuspringen und unabhängig von der Hohlraumoberfläche (7) aus einer vorspringenden Lage zurückgezogen zu werden,
- wobei das unter Druck stehende fluide Medium dem Hohlraum (4) in dem Zustand zugeführt wird, in welchem der bewegliche Kern (5) in den Hohlraum (4) vorspringt, und
- das Volumen des Hohlraums anfänglich durch Bewegen der Hohlraumoberfläche (7), während der bewegliche Kern (5) in einem konstanten Abstand von der gegenüber liegenden Hohlraumoberfläche der Form (6) gehalten wird, und anschließendes Zurückziehen des beweglichen Kerns (5), bis das äußerste Ende davon im wesentlichen mit der Hohlraumoberfläche (7) zusammenfällt, erhöht wird.

## Revendications

1. Procédé de moulage par injection pour mouler des articles creux ayant au moins une nervure (2) de support entre deux parois opposées, comprenant les stades dans lesquels :
- on injecte une résine fondue dans l'empreinte (4) d'un moule (6) métallique, le moule ayant une surface (7) d'empreinte mobile munie d'au moins une saillie (5) en un emplacement où une nervure (2) de support doit être formée, et
- on envoie un fluide sous pression dans l'empreinte du moule métallique, **caractérisé en ce que**
- la saillie est un noyau (5) mobile susceptible de faire saillie dans l'empreinte (4) du moule métallique et d'être rétracté indépendamment de la surface (7) de l'empreinte d'une position en saillie,
- le fluide sous pression étant envoyé dans l'empreinte (4) à l'état dans lequel le noyau (5) mobile fait saillie dans l'empreinte (4) et
- le volume de l'empreinte (4) étant augmenté au début en déplaçant la surface (7) de l'empreinte alors que le noyau (5) mobile est maintenu à une distance constante de la surface opposée de l'empreinte du moule (6), suivi d'une rétraction du noyau (5) mobile jusqu'à ce que son extrémité extrême coïncide sensiblement avec la surface (7) de l'empreinte.
